# EUROPEAN PATENT APPLICATION

(11) **EP 1 462 824 A1**
(43) Date of publication of application: **29.09.2004**
(21) Application number: 04006481.8
(22) Date of filing: 18.03.2004
(51) Int. Cl.: G01T 1/29, G21K 4/00

(54) **Method for manufacturing radiographic image conversion panel and radiographic image conversion panel**

(30) Priority: 24.03.2003 JP 2003079232
(71) Applicant: KONICA MINOLTA HOLDINGS, INC., Tokyo 100-0005 (JP)
(72) Inventor: Maezawa, Akihiro, Hino-shi, Tokyo 191-8511 (JP); Mishina, Noriyuki, Hino-shi, Tokyo 191-8511 (JP)
(74) Representative: Gille Hrabal Struck Neidlein Prop Roos

(57) **Abstract**

A radiographic image conversion panel, including at least one photostimulable phosphor layer. The strength ratio of a peak at a luminescence wavelength of 440 nm in an ultraviolet ray excitation wavelength of 274 nm of a photostimulable phosphor before heating the one photostimulable phosphor layer at 400°C to that after the heating is within ±10%.

## Description

### BACKGROUND

### Technical Field

The present invention relates to a method for manufacturing a radiographic image (hereinafter also referred to as a radiograph) conversion panel and the radiographic image conversion panel.

### Description of the Related Art

In earlier technology, so-called radiography in which silver salt is used to obtain a radiological image has been utilized. However, the method for imaging a radiological image without silver salt has been developed. That is, the method of imaging by a phosphor absorbing the radial ray transmitted through a subject in a phosphor, thereafter, excited by certain type of energy, and radiating radiological energy accumulated in the phosphor as fluorescence, is disclosed.

A concrete example of a radiographic image conversion method is known, in which a panel comprising and a photostimulable phosphor layer provided on a support (hereinafter also referred to as base material) is applied, and both of/either visible light and/or infrared light is used as excitation energy (see U.S. Patent No. 3,859,527).

A radiographic image conversion method using a photostimulable phosphor of higher luminance and sensitivity has been developed. A radiographic image conversion method using a BaFX: Eu²⁺ system (X: Cl, Br, I) phosphor disclosed in JP Tokukaisho-59-75200A, a radiographic image conversion method using an alkali halide phosphor disclosed in such as JP Tokukaisho-61-72087A, and an alkali halide phosphor containing metals of Tl⁺ Ce³⁺, Sm³⁺, EU³⁺, Y³⁺, Ag⁺, Mg²⁺, Pb²⁺ and In³⁺ as a co-activator disclosed in JP Tokukaisho-61-73786A and 61-73787A are the examples.

In late years, in analysis of a diagnostic image, a radiographic image conversion panel having higher sharpness has been required.

As a method for improving the sharpness, for example, attempts of controlling the shape of photostimulable phosphor itself have been made in order to improve sensitivity and sharpness.

One of these attempts is, for example, a method of using a fine quasi-columnar photostimulable phosphor layer deposited on a support having a fine concavoconvex pattern, which is disclosed on JP Tokukaisho-61-142497A.

Further, the following methods and the like are also proposed; as disclosed in JP Tokukaisho-61-142500A, a method of using a radiographic image conversion panel having a photostimulable phosphor layer in which the cracks of a columnar photostimulable phosphor deposited on a support having a fine pattern are further developed with shock-treatment; as disclosed in JP Tokukaisho-62-39737A, a method of using a radiographic image conversion panel having a photostimulable phosphor layer cracked from the surface side to be quasi-columnar pattern; and, as disclosed in JP Tokukaisho-62-110200A, a method of forming a photostimulable phosphor layer having pores onto a support by deposition, subsequently the pores developped to be cracks with heat treatment.

In addition, in JP Tokukaihei-2-58000A, a radiographic pattern conversion panel is described which has a photostimulable phosphor layer where strip columnar crystals with a definite slope against a normal line of a support are formed on the support by a vacuum deposition film formation method.

In late years, a radiographic image conversion panel using alkali halide such like CsBr as a base material is proposed. Especially when Eu is used as an activator, the improvement of X ray conversion efficiency, which has not achieved before, is expected.

However, diffusion of Eu due to heat is remarkable and Eu has a nature that vapor pressure under vacuum is high. Thus, Eu is easily dispersed in the host and a problem has occurred where Eu exists with uneven distribution in the host. As a result, it has been difficult to obtain high X-ray conversion efficiency by using and activating Eu, and Eu did not come into practical use in the market.

In activators of rare earth elements by which high X-ray conversion efficiency is obtained, the vacuum deposition film formation method influences heat distribution of a substrate because heating at the deposition becomes radiant heat of the substrate.

This heat distribution is also changed by a degree of vacuum, crystal growth becomes uneven by the heat distribution, and rapid disturbance occurs in luminance and sharpness. In the vacuum deposition formation method, it has been difficult issues to control these performances (for example, JP-Tokukaihei-10-140148A, JP-Tokukaihei-10-265774A).

Therefore, the vacuum deposition film formation method, particularly when rare earth elements such as Eu are used, cannot perform a stable Eu-diffusion and has a large restriction on handling because of using glass against a low moisture resistance thereof. In the vacuum deposition film formation method, utilization efficiency of primary materials is only several percents to 10%. Thus, the product has become expensive and lacked a multipurpose property.

Therefore, in the market, a radiographic image conversion panel which is excellent in luminance, evenness of luminance, and sharpness and a method for manufacturing the radiographic image conversion panel have been required.

### SUMMARY

The first aspect of the invention is a radiographic image conversion panel, comprising at least one photostimulable phosphor layer, wherein a strength ratio of a peak at a luminescence wavelength of 440 nm in an ultraviolet ray excitation wavelength of 274 nm of a photostimulable phosphor before heating the one photostimulable phosphor layer at 400°C to that after the heating is within ±10%.

According to the first aspect of the invention, it is possible to provide a radiographic image conversion panel which is excellent in even luminance and exhibits high luminance and high sharpness.

The second aspect of the invention is a method for manufacturing the radiographic image conversion panel of claim 1, which comprises: heating a photostimulable phosphor raw material at a vacuum degree of 1 x 10⁻² to 1 x 10⁻¹ Pa and a temperature of 400 to 700°C for 1 to 30 hours; cooling an evaporation source rapidly; and further heating the evaporation source cooled.

### BRIEF DESCRIPTION OF THE DRAWINGS

The present invention will become more fully understood from the detailed description given hereinbelow and the accompanying drawings which are given by way of illustration only, and thus are not intended as a definition of the limits of the present invention, and wherein;

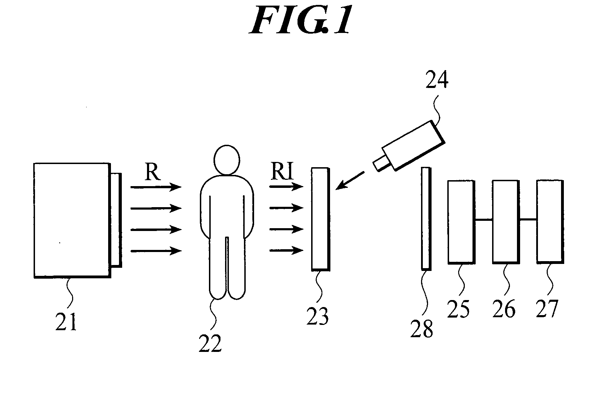

FIG. 1 is a schematic view showing a construction example using a radiographic pattern conversion panel according to an embodiment of the present invention.

### PREFERRED EMBODIMENTS OF THE INVENTION

Embodiments of the invention will be described in detail.
1. The first aspect of the invention is a radiographic image conversion panel, comprising at least one photostimulable phosphor layer, wherein a strength ratio of a peak at a luminescence wavelength of 440 nm in an ultraviolet ray excitation wavelength of 274 nm of a photostimulable phosphor before heating the one photostimulable phosphor layer at 400°C to that after the heating is within ±10%.
2. In the panel of paragraph 1, preferably, the photostimulable phosphor layer contains a photostimulable phosphor which makes alkali halide represented by a general formula (1) a host, and the photostimulable phosphor layer is formed to have a thickness of 50 µm to 1 mm by spherical phosphor particles and a high molecular material,

   M¹X·aM²X' ·bM³X" :eA (1)

   where M¹ represents at least one alkali metal atom selected from atoms of Li, Na, K, Rb and Cs; M² represents at least one bivalent metal atom selected from atoms of Be, Mg, Ca, Sr, Ba, Zn, Cd, Cu and Ni; M³ represents at least one trivalent metal atom selected from atoms of Sc, Y, La, Ce, Pr, Nd, Pm, Sm, Eu, Gd, Tb, Dy, Ho, Er, Tm, Yb, Lu, Al, Ga and In; X, X' and X" represent at least one halogen atom selected from atoms of F, Cl, Br and I; A is at least one metal atom selected from respective atoms of Eu, Tb, In, Ce, Tm, Dy, Pr, Ho, Nd, Yb, Er, Gd, Lu, Sm, Y, Tl, Na, Ag, Cu and Mg; and a, b and e satisfy 0≤a<0.5, 0≤b<0.5 and 0<e≤0.2.
3. In the panel of paragraph 2, the photostimulable phosphor contained in the photostimulable phosphor layer is preferably CsBr:Eu.
4. The second aspect of the invention is a method for manufacturing the radiographic image conversion panel of claim 1, comprising: heating a photostimulable phosphor raw material at a vacuum degree of 1 x 10⁻² to 1 x 10⁻¹ Pa and a temperature of 400 to 700°C for 1 to 30 hours; cooling an evaporation source rapidly; and further heating the evaporation source cooled.
5. In the method of paragraph 4, preferably the evaporation source is heated at 700 to 900°C.

Preferred embodiments of the invention will be described in further detail.

As a result of various studies, the present inventors have found that a radiographic image conversion panel which is excellent in uneven luminance and exhibits high luminance and high sharpness is obtained by making a strength ratio (strength change) of peaks at a luminescence wavelength of 440 nm in an ultraviolet ray excitation wavelength of 274 nm of a photostimulable phosphor within ±10% before and after heating at 400°C the photostimulable phosphor obtained by reheating an evaporation source at 700 to 900°C obtained by heating phosphor materials at 400°C or above.

The above strength change is a value measured using a fluorescence spectrophotometer (F-4500 supplied from Hitachi Ltd.).

In the invention, a photostimulable phosphor layer of the invention can be made by a coating mode, and the photostimulable phosphor layer is composed primarily of spherical phosphor and high molecular resin, and formed by coating on a support using a coater.

The phosphor may be a single crystal or an assembly of multiple fine particles, but as the phosphor particles in the phosphor of the invention, preferably used are spherical crystals or spherical phosphor particles (hereinafter, also simply referred to as spherical particles). But, the spherical particles may be not necessarily an assembly of spherical crystals, and include a case where an assembly of particles in the other crystal form results in forming the spherical particles.

Spherical shapes of the spherical phosphor particles are those where a major axis (a) and a minor axis (b) of a spherical crystal or a spherical particle (average values, respectively) are given from a photograph of the phosphor particles picturized using a scanning electron microscope, and a ratio of the length of the major axis to the length of the minor axis: (a)/(b) falls in the range of 0.98 to 1.00.

The spherical phosphor particles of the invention may be a single crystal, an agglomerate of single crystals or an agglomerate of crystals in the other form, but a final particle form is required to be spherical.

In the invention, in order to make a definite boundary between a sphere and the other polyhedrons clear, for example, in the case of polyhedral crystals, it is defined that those where the ratio of the longest axis to the shortest axis of the polyhedron falls in the range described above are included in the category of sphere in the invention.

Furthermore, it is defined that even a polyhedron of 14-hedron or more which falls in the range described above is substantially spherical.

As the photostimulable phosphor which can be used for the coating type phosphor layer, generally used are photostimulable phosphors which exhibit photostimulated luminescence at a wavelength range of 300 to 500 nm by excitation light at a wavelength range of 400 to 900 nm.

The photostimulable phosphor represented by the above general formula (1) preferably used for the invention will be illustrated below.

M¹X·aM²X' · bM³X" : eA General formula (1)

As for the photostimulable phosphor represented by the former-described formula (1), M¹ represents at least one kind of alkali metal selected from Li, Na, K, Rb, Cs and the like. Among them, at least one kind of alkali metal selected from Rb and Cs is preferable, and Cs is more preferable.

M² represents at least one kind of bivalent metal selected from Be, Mg, Ca, Sr, Ba, Zn Cd, Cu, Ni and the like. Among them, a bivalent metal selected from Be, Mg, Ca, Sr and Ba is preferable.

M³ represents at least one kind of trivalent metal selected from Sc, Y, La, Ce, Pr, Nd, Pm, Sm, Eu, Gd, Tb, Dy, Ho, Er, Tm, Yb, Lu, Al, Ga, In and the like. Among them, a trivalent metal selected from Y, Ce, Sm, Eu, Al, La, Gd, Lu, Ga and In is preferable.

A represents at least one kind of metal selected from Eu, Tb, In, Ce, Tm, Dy, Pr, Ho, Nd, Yb, Er, Gd, Lu, Sm, Y, Tl, Na, Ag, Cu and Mg.

From the viewpoint of improving photostimulated luminescence luminance of a photostimulable phosphor, X, X' and X'' represent at least one kind of halogen selected from F, Cl, Br and I, among them, preferably at least one kind of halogen selected from Br and I. At least one kind of halogen selected from Br and I is more preferable.

In the chemical compound represented in the general formula (1), a is 0 ≤ a < 0.5, preferably 0 ≤ a < 0.01, and b is 0 ≤ b < 0.5, preferably 0 ≤ b ≤ 10⁻², and e is 0 < e ≤ 0.2, preferably 0 < e ≤ 0.1.

Used as for the materials of the phosphor are;
(a) at least one kind of chemical compound selected from NaF, NaCl, NaBr, NaI, KF, KCl, KBr, KI, RhF; RhCl ; RbBr, RbI, CsF, CsCl, CsBr and CsI,
(b) at least one kind of chemical compound selected from MgF₂, MgCl₂, MgBr₂, MgI₂, CaF₂, CaCl₂, CaBr₂, CaI₂, SrF₂, SrCl₂, SrBr₂, SrI₂, BaF₂, BaCl₂, BaBr₂, BaBr₂·2H₂O, BaI₂, ZnF₂, ZnCl₂, ZnBr₂, ZnI₂, CdF₂, CdCl₂, CdBr₂, CdI₂, CuF₂, CuCl₂, CuBr₂, CuI, NiF₂, NiCl₂, NiBr₂ and NiI₂, and
(c) a halide compound having at least one kind of trivalent metal selected from Sc, Y, La, Ce, Pr, Nd, Pm, Sm, Eu, Gd, Tb, Dy, Ho, Er, Tm, Yb, Lu, Al, Ga and In.
(d) As for materials of the activator, a compound having a metal selected from Eu, Tb, In, Cs, Ce, Tm, Dy, Pr, Ho, Nd, Yb, Er, Gd, Lu, Sm, Y, Tl, Na, Ag, Cu and Mg.

The phosphor materials of above-described (a) to (d) are weighed so that the factors a, b and e in the mixed composition according to the general formula (1) are within the above-described ranges, and dissolved in pure water.

Where the materials can be mixed with mortar, ball mill, mixer mill and the like. After the pH value C is regulated to 0<C<7 with a predefined acid, water content of the solution is evaporated.

Among the above photostimulable phosphors, it is preferred that the photostimulable phosphor particles contain iodine. For example, iodine-containing bivalent europium-activated alkali earth metal fluoride halide type phosphors, iodine-containing bivalent europium-activated alkali earth metal halide type phosphors, iodine-containing rare earth element-activated rare earth oxy halide type phosphors, and iodine-containing bismuth-activated alkali metal halide type phosphors are preferable because they exhibit photostimulated luminescence with high luminance, and particularly it is preferred that the photostimulable phosphor is an Eu addition BaFI compound.

In the invention, as examples of binders used for the phosphor layer, it is possible to include binders of which representatives are proteins such as gelatin, polysaccharides such as dextran, or natural high molecular substances such as gum arabic, and synthetic high molecular substances such as polyvinyl butyral, polyvinyl acetate, nitrocellulose, ethylcellulose, vinylidene chloride, vinyl chloride copolymer, polyalkyl(meth)acrylate, vinyl chloride, vinyl acetate copolymer, polyurethane, cellulose acetate butyrate, polyvinyl alcohol and linear polyester, and the like. But, the invention is characterized in that the binder is a resin making thermoplastic elastomer a major ingredient. As the thermoplastic elastomer, for example, included are polystyrene-type thermoplastic elastomers described above, polyolefin type thermoplastic elastomers, polyurethane type thermoplastic elastomers, polyester type thermoplastic elastomers, polyamide type thermoplastic elastomers, polybutadiene type thermoplastic elastomers, ethylene vinyl acetate type thermoplastic elastomers, polyvinyl chloride type thermoplastic elastomers, natural gum type thermoplastic elastomers, fluorine gum type thermoplastic elastomers, polyisoprene type thermoplastic elastomers, chlorinated polyethylene type thermoplastic elastomers, styrene-butadiene gum and silicon gum type thermoplastic elastomers, and the like.

In these, the polyurethane type thermoplastic elastomers and the polyester type thermoplastic elastomers are preferable because dispersibility is good since a binding force with the phosphor is strong, ductility is rich and flexibility against radiation sensitizing screen becomes good. These binders may be those which are crosslinked with a crosslinker.

A mixing ratio of the binder to the photostimulable phosphor in a coating solution varies depending on a determined value of Hayes rate of the aimed radiographic image conversion panel, but is preferably from 1 to 20 parts by mass and more preferably from 2 to 10 parts by pass based on the phosphor.

As organic solvents used for the preparation of the photostimulable phosphor layer coating solution, for example, included are lower alcohol such as methanol, ethanol, isopropanol and n-butanol, ketone such as acetone, methylethylketone, methylisobutylketone and cyclohexane, ester of lower fatty acid and lower alcohol such as methyl acetate, ethyl acetate and n-butyl acetate, ether such as dioxane, ethyleneglycol monoethylcther and ethyleneglycol monomethylether, aromatic compounds such as triol and xylol, hydrocarbon halide such as methylene chloride and ethylene chloride, and the mixtures thereof.

In the coating solution, various additives may be mixed such as a dispersant to enhance the dispersibility of the phosphor in the coating solution and a plasticizer to enhance a binding force between the binder and the phosphor in the photostimulable phosphor layer after the formation. Examples of the dispersants used for such a purpose, it is possible to include phthalic acid, stearic acid, caproic acid, lipophilic surfactants and the like. Examples of the plasticizers, it is possible to include phosphate ester such as triphenyl phosphate, tricresyl phosphate and diphenyl phosphate, phthalate ester such as diethyl phthalate and dimethoxyethyl phthalate, glycolate ester such as ethylphthalylethyl glycolate and butylphthalylbutyl glycolate; and polyester of polyethyleneglycol and aliphatic dibasic acid such as polyester of triethyleneglycol and adipic acid and polyester of diethyleneglycol and succinic acid. Also, the dispersant such as stearic acid, phthalic acid, caproic acid and lipophilic surfactant may be mixed in the photostimulable phosphor layer coating solution for the purpose of enhancing the dispersibility of photostimulable phosphor particles.

The preparation of the photostimulable phosphor layer coating solution is carried out using a dispersing apparatus such as a ball mill, bead mill, sand mill, attritor, three roll mill, high speed impeller dispersing machine, Kady mill, or ultrasonic dispersing machine, and the like.

A coating film is formed by evenly coating the coating solution prepared as the above on the support surface described below. As coating methods which can be used, it is possible to use common coating means such as a doctor blade, roll coater, knife coater, comma coater, lip coater, and the like.

The coating film formed by the above means is subsequently heated and dried to complete the formation of the photostimulable phosphor layer on the support. A film thickness of the photostimulable phosphor layer varies depending on properties of the aimed radiographic image conversion panel, types of the photostimulable phosphor, the mixing ratio of the binder to the phosphor and the like, but is from 0.5 µm to 1 mm, preferably from 10 to 500 µm, more preferably from 50 to 500 µm, in the invention.

A substance with high absorption of light and a substance with high reflection of light may be contained in the photostimulable phosphor layer, and this is effective for reduction of light diffusion of photostimulated excitation light which enters in the photostimulable phosphor layer toward a horizontal direction.

Here, substances having high light reflectance designate substances having high light reflectance for photostimulated excitation light (500 to 900nm, especially 600 to 800nm). Aluminum, magnesium, silver, indium, other metals, white pigments and coloring materials of green to red can be given as examples. White pigments can also reflect photostimulated luminescence.

As for the white pigments, TiO₂ (anatase and rutile type), MgO, PbCO₃, Pb(OH)₂, BaSO₄, Al₂O₃, M_{(II)}FX (M_{(II)} is at least one kind of element selected from Ba, Sr and Ca, and X is either Cl or Br.), CaCO₃, ZnO, Sb₂O₃, SiO₂, ZrO₂, lithopone (BaSO₄·ZnS), magnesium silicate, anionic silico-sulfate, anionic lead phosphate and aluminum silicate are given as examples.

These white pigments disperse photostimulated luminescence easily by reflection or refraction of light since they have high hiding power and refractive index. As a result, these substances can improve the sensitivity of the radiographic image conversion panel markedly.

As for the substances of high absorptivity, such like carbon black, chromium oxide, nickel oxide and iron oxide, and blue color materials are given as examples. Among them, carbon black also absorbs photostimulated luminescence.

Further, both organic and inorganic system color materials are available as the color materials described above. As the organic system color materials, Zabon Fast Blue 3G (produced by Hoechst), Estrol Brill Blue N-3RL (produced by Sumitomo Chemical), D & C Blue No. 1 (produced by National Aniline), Spirit Blue (produced by Hodogaya Chemical), Oil Blue No. 603 (produced by Orient), Kiton Blue A (produced by Chiba-Geigy), Aizen Catiron Blue GLH (produced by Hodogaya Chemical), Lake Blue AFH (produced by Kyowa Sangyo), Primocyanine 6GX (produced by Inabata & Co.), Brill Acid Green 6BH (produced by Hodogaya Chemical), Cyan Blue BNRCS (produced by Toyo Ink), Lionoil Blue (produced by Toyo Ink) and the like can be used.

Further, organic system metal complex salt color materials such as color index Nos. 24411, 23160, 74180, 74200, 22800, 23154, 23155, 24401, 14830, 15050, 15760, 15707, 17941, 74220, 13425, 13361, 13420, 11836, 74140, 74380, 74350, 74460 and the like can be given.

As for the inorganic system color materials, for example, inorganic pigment such as permanent blue, cobalt blue, cerulean blue, chromium oxide, TiO₂-ZnO-Co-NiO system and the like can be given.

Further, a photostimulable phosphor layer of the present invention can comprise a protective layer.

A protective layer can be manufactured by applying an embrocation of the protective layer directly to the photostimulable phosphor layer, adhering a separately formed protective layer is adhered to the photostimulable phosphor layer, or forming a photostimulable phosphor layer is directly formed on a previously formed protective layer.

As for materials of the protective layer, general materials for a protective layer is used such as cellulose acetate, nitrocellulose, polymethyl methacrylate, polyvinyl butyral, polyvinyl folmal, polycarbonate, polyester, polyethylene terephthalate, polyethylene, polyvynilidene chloride, nylon, polytetrafluoroethylene, polytriflurochloroethylene, tetrafluoroethylene-hexafluoropropylene copolymer, vinylidene chloride-vinyl chloride copolymer, vinylidene chloride-acrylonytrile copolymer and the like. A transparent glass sheet is also available as a protective layer.

The layer thickness of these protective layers is preferably 0.1 to 2000µm.

FIG. 1 is a schematic view showing an example of a structure of radiographic image conversion panel according to the present invention.

In FIG. 1, a reference numeral 21 designates a radial ray generator, 22 designates a subject, 23 designates a radiographic image conversion panel comprising a visible or infrared light photostimulable phosphor layer having a photostimulable phosphor, 24 designates a photostimulated excitation light source to emit a radial ray latent image of radiographic image conversion panel 23 as Photostimulated luminescence, 25 designates a photoelectric converter to detect the photostimulated luminance emitted from a radiographic image conversion panel 23, 26 designates a image playback equipment to replay photoelectric signals detected by a photoelectric converter 25 as an image, 27 designates a image display unit which display the reproduced image, 28 designates a filter that cut the reflected light and transmit the light only emitted from a radiographic image conversion panel 23.

In addition, FIG. 1 shows an example of obtaining a radial ray transmitted image of a subject. When a subject 22 itself radiates radial ray, the above-described radial ray generator 21 is not particularly required.

The photoelectric converter 25 or later have only to replay information of light as an image of some kind, and are not limited to the above-described system.

As shown in FIG. 1, the subject 22 is set between a radial ray generator 21 and a radiographic image conversion panel 23, and radial ray R is radiated. Then radial ray R transmits a subject 22 according to a variety of transmittance of the each part in the subject 22. The transmission image RI (that is, an image of strong and weak of radial ray) incidents to a radiographic image conversion panel 23.

A photostimulable phosphor layer of the radiographic image conversion panel 23 absorbs the incidented transmission image RI. Then electrons and/or pores, the number of which is proportional to the amount of radiation absorbed in photostimulable phosphor layer, are generated to accumulate the trap level of a photostimulable phosphor.

That is, a latent image in which the energy of a transmitted radial ray image is accumulated is formed. Succusesively the latent image is elicited by excitation of light energy.

A photostimulated excitation light source 24 irradiates visible or infrared light to a photostimulable phosphor layer. The electrons and/or pores accumulated in the trap level are flushed and accumulated energy is emitted as photostimulated luminescence.

The strength of the emitted photostimulated luminescence is proportional to the number of the accumulated electron and/or pores, e.g. the amount of radial ray energy absorbed in a photostimulable phosphor layer of the radiographic image conversion panel 23. This light signal is converted to an electric signal with a photoelectric converter 25, for example, such as a photoelectric multiplier, subsequently replayed with an image playback equipment 26, and displayed with an image display 27.

The image playback equipment 26 is more effective if it does not simply replay an electric signal as an image signal, but also can perform so called image processing and calculation, memory and storage of an image.

The emitted photostimulable luminescence desirably has the spectrum distribution in as shorter wavelength band as possible. Because a light is required to be separated into reflection light of photostimulated excitation light and photostimulated luminescence emitted from a photostimulable phosphor layer when it is exited by light energy, and a photoelectric converter which detects the luminescence emitted from photostimulable phosphor layer generally has higher sensitivity for light energy of wavelength 600nm or less.

The photostimulable phosphor of the present invention fills the above-described parameters simultaneously, since the luminescence wavelength band of the photostimulable phosphor of the present invention is between 300 and 500nm while the photostimulated excitation wavelength band is between 500 and 900nm. In resent years, since diagnostic unit has been downsized, a laser diode, which has high power output and is to be compacted easily, is preferably used, and the preferable wavelength of the laser diode is 680nm. The photostimulable phosphor applied to the radiographic image conversion panel of the present invention shows remarkably fine sharpness when excitation wavelength is 680nm.

In other words, every photostimulable phosphor of the present invention shows a luminescence having the main peak thereof at 500nm or less. Since the luminescence is easily separated from excitation light and the wavelength of the luminescence accords with spectral sensitivity of a photodetector, the photostimulated luminescence is effectively detected. As a result, the sensitivity of image receiving system is improved because of high efficiency of light detection.

A spectrum of a light source used in photostimulated excitation light source 24 includes photostimulated excitation wavelength the photostimulable phosphor used in a radiographic image conversion panel 23. Particularly, when a laser diode is used, the optical system becomes simple and the excitation light luminance becomes high. Since efficiency of photostimulated luminescence is improved, more preferable results can be obtained.

For example, as for the laser, He-Ne laser, He-Cd laser, Ar ion laser, Kr ion laser, N₂ laser, YAG laser and its second harmonic, ruby laser, semiconductor laser, all kinds of dye laser, metal vapor laser such as cupper vapor laser and the like can be applied. Normally continuous oscillation laser such like He-Ne laser and Ar ion laser is desirable. Pulse oscillation laser is also available when and the pulse of laser is synchronized with scanning cycle of each pixel in a panel.

If a delay of a luminescence is utilized to separate a light, as disclosed in JP-Tokukaisho-59-22046A, pulse oscillation laser is more preferable than modulated continuous oscillation laser.

In the above-described laser light sources, semiconductor laser is particularly preferably available because of its small size, affordable price and furthermore needlessness of a modulator.

A filter 28 is selected according to a combination of photostimulated luminescence wavelength of a photostimulable phosphor included in a radiographic image conversion panel 23 and photostimulated excitation light wavelength of photostimulated excitation light source 24, since the filter transmits the photostimulated luminescence emitted from a radio graphic image conversion panel 23 and intercept photostimulated excitation light.

For example, in practically preferable combination such that excitation wavelength is 500 to 900nm and photostimulated luminance wavelength is 300 to 500nm, glass filters from blue to violet such as C-39, C-40, V-40, V-42 and V-44 (Toshiba Co. ltd.), 7-54 and 7-59 (Corning Co. Ltd.), BG-1, BG-3, BG-25, BG-37 and BG-38 (Spectrofilm Co. Ltd.) and the like are available as the filter. An interference filter having any property on some level also can be used. As for the photoelectrical converter 25, any devices that convert variation of light intensity to that of electric signal are available such as photoelectric tube, photoelectric multiplier, photodiode, phototransistor, solar battery, photoconductive cell and the like.

### EXAMPLE

The present invention is specifically illustrated by referring to examples, but embodiments of the invention is not limited thereto.

### EXAMPLE 1:

### <MANUFACTURE OF RADIOGRAPHIC IMAGE CONVERSION PANEL SAMPLES 1 TO 5>

### (MANUFACTURE OF PHOTOSTIMULABLE PHOSPHOR)

A photostimulable phosphor was obtained by filling CsBr:Eu basic materials prepared such that an Eu amount is 5/10,000 mol based on 1 mol of CsBr in a molybdenum boat and heating the materials at a vacuum degree of 1.0 x 10⁻² Pa and a temperature of 400°C for 2 hours, then by cooling them rapidly, and thereafter by further heating the cooled evaporation source at 700°C for 4 hours.

The strength ratio of the peak at the luminescence wavelength of 440 nm in an ultraviolet ray excitation wavelength of 274 nm of the photostimulable phosphor before heating at 400°C to that after the heating at 400°C was 10%.

In order to form the photostimulable phosphor layer, the above phosphor and a polyester solution (Vylon 63ss supplied from Toyobo Co., Ltd.) were mixed/dispersed as a resin solution of 5% by mass of the phosphor with a solid concentration of 95% by mass to make a coating material.

The photostimulable phosphor layer was formed by coating this coating material on a support of 188 µm polyethylene terephthalate film (188 x 30 supplied from Toray Industries, Inc.) and coating/drying in three drying zones of 80 °C, 100 °C and 110 °C in an inert oven under a drying atmosphere of Ar at a CS (coating speed) of 2 m/min.

The support having the above photostimulable phosphor layer was placed in a barrier bag (GL-AE relief printing) to which backside AL foil was attached, and sealed to make the radiographic pattern conversion panel sample 1 (sample 1).

The radiographic pattern conversion panel samples 2 to 5 (Samples 2 to 5) were made in approximately the same manner as that of the sample 1, except the heating temperature of the phosphor basic materials and change of the reheating temperature of the evaporation source, and the value of strength ratio, as shown in the table 1.

For respective samples, the following evaluations were carried out.

### <EVALUATION OF SHARPNESS>

The sharpness of the radiographic image conversion panel sample was evaluated by obtaining a modification transmission function (MTF).

MTF was obtained by attaching a CTF chart on the radiographic image conversion panel sample, subsequently irradiating 80 kVp of X-ray at 10 mR (distance to a subject: 1.5 m) on the radiographic image conversion panel sample, and then scanning/reading a CTF chart pattern using semiconductor laser with a diameter of 100 µmφ (680 nm: power on the panel, 40 mW). A value in the table is represented by a value where 2.01 p/mm of MTF value was added.

### <EVALUATION OF LUMINANCE AND LUMINANCE DISTRIBUTION (UNEVEN LUMINANCE)>

The luminance was evaluated by using Regius 350 supplied from Konica Corporation.

As with the evaluation of sharpness, after irradiating X-ray by a tungsten bulb at 80 kVp and 10 mAs with a distance of 2 m between an expose radiation source and a plate, luminance was read by placing the plate in Regius 350. The evaluation was performed on the basis of electric signals obtained from the photomultiplier.

Electric signal distribution from the photomultiplier in a picturized face was relatively evaluated, and a standard deviation was calculated to make a luminance distribution (S.D.) of each sample. The smaller a value is, the less the uneven luminance is.

The shape of phosphor particles in each sample were measured by visual check through the SEM observation method. A particle having a ratio of the long side to the short side which is in the range of 0.95-1.05 was considered to have a spherical shape. As a result, each of the samples 1, 2, 3 and 4 according to the invention has a spherical shape but the comparative sample 4 has an indefinite shape.

The obtained results are shown in the Table 1.

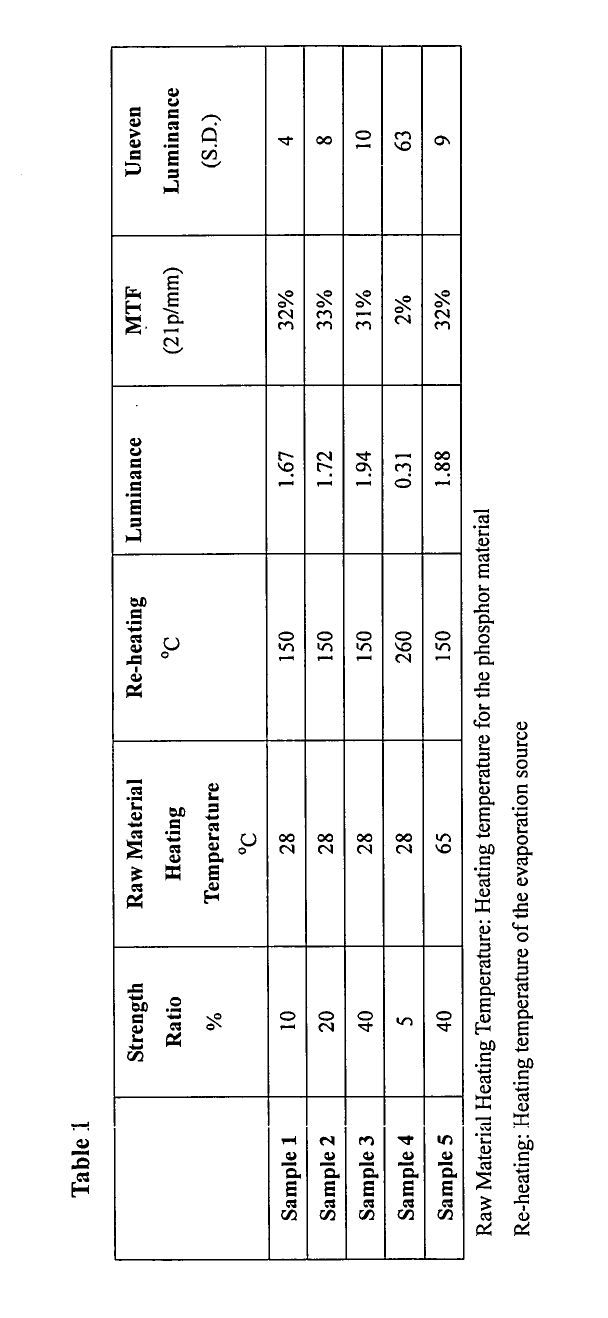

As obvious from Table 1, it is shown that the samples of the invention are excellent in comparison with the comparative sample.

The entire disclosure of Japanese Patent Application No. 2003-079232 which was filed on March 24, 2003, including specification, claims, drawings and abstract, is incorporated into the present invention in its entirety.

## Claims

1. A radiographic image conversion panel, comprising at least one photostimulable phosphor layer, wherein a strength ratio of a peak at a luminescence wavelength of 440 nm in an ultraviolet ray excitation wavelength of 274 nm of a photostimulable phosphor before heating the one photostimulable phosphor layer at 400°C to that after the heating is within ±10%.

2. The panel of claim 1, wherein the photostimulable phosphor layer contains a photostimulable phosphor which makes alkali halide represented by a general formula (1) a host, and the photostimulable phosphor layer is formed to have a thickness of 50 µm to 1 mm by spherical phosphor particles and a high molecular material,
M¹X · aM²X' · bM³X' ' : eA (1)
where M¹ represents at least one alkali metal atom selected from atoms of Li, Na, K, Rb and Cs; M² represents at least one bivalent metal atom selected from atoms of Be, Mg, Ca, Sr, Ba, Zn, Cd, Cu and Ni; M³ represents at least one trivalent metal atom selected from atoms of Sc, Y, La, Ce, Pr, Nd, Pm, Sm, Eu, Gd, Tb, Dy, Ho, Er, Tm, Yb, Lu, Al, Ga and In; X, X' and X" represent at least one halogen atom selected from atoms of F, Cl, Br and I; A is at least one metal atom selected from respective atoms of Eu, Tb, In, Ce, Tm, Dy, Pr, Ho, Nd, Yb, Er, Gd, Lu, Sm, Y, Tl, Na, Ag, Cu and Mg; and a, b and e satisfy 0≤a<0.5, 0≤b<0.5 and 0<e≤0.2.

3. The panel of claim 1 or 2, wherein the photostimulable phosphor contained in the photostimulable phosphor layer is CsBr:Eu.

4. A method for manufacturing the radiographic image conversion panel of any one of claims 1-3, comprising:
heating a photostimulable phosphor raw material at a vacuum degree of 1 x 10⁻² to 1 x 10⁻¹ Pa and a temperature of 400 to 700°C for 1 to 30 hours;
cooling an evaporation source rapidly; and
further heating the evaporation source cooled.

5. The method of claim 4, wherein the evaporation source is heated at 700 to 900°C.
